# EUROPEAN PATENT APPLICATION

(11) **EP 4 789 950 A1**
(43) Date of publication of application: **12.08.2026**
(21) Application number: 25204002.7
(22) Date of filing: 23.09.2025
(51) Int. Cl.: B62D 5/04

(54) **STEERING CONTROL APPARATUS AND METHOD FOR ELECTRIC POWER STEERING SYSTEM**

(30) Priority: 05.02.2025 KR 20250014746
(71) Applicant: Hyundai Mobis Co., Ltd., Gangnam-gu Seoul 06141 (KR)
(72) Inventor: KIM, Kyu Ha, 16891 Yongin-si, Gyeonggi-do (KR); CHO, Jung Min, 16891 Yongin-si, Gyeonggi-do (KR); JEONG, Eui Nam, 16891 Yongin-si, Gyeonggi-do (KR); KIM, Kwang Woong, 16891 Yongin-si, Gyeonggi-do (KR)
(74) Representative: Jung, Minkyu

(57) **Abstract**

Disclosed are a steering control apparatus and method for an electric power steering system. The steering control apparatus includes a processor, and a memory configured to store an instruction that is executed by the processor. The processor generates a compensation current that is used to generate a reaction torque against a steering direction based on at least one of kinetic energy stored by a mass component of the electric steering system or potential energy stored by a rotational elastic component due to tire torsion, using a steering angle and a learned end angle.

## Description

### BACKGROUND

### FIELD

Exemplary embodiments of the present disclosure relate to a steering control apparatus and method for an electric power steering system.

### DISCUSSION OF THE BACKGROUND

In electric power steering systems, when a driver turns a steering wheel to a rightmost or leftmost end, a mechanical collision may occur between a stopper of a rack bar and a gearbox housing. To prevent the foregoing, electric power steering systems detect an end angle of the rack bar and reduce a driving output of a motor as a steering angle approaches the end angle.

A method of reducing the driving output of the motor is classified into a direct type and an indirect type.

The direct type refers to reducing the output of a steering logic according to a steering angle position, and uses a motor output attenuation table to immediately reduce the output of the motor as the steering position approaches the end. Although the direct type may achieve optimal performance under specific load conditions due to high responsiveness, it is problematic in that there is a relatively large deviation in deceleration performance based on changes in a vehicle load (e.g., changes in road surface/vehicle speed), and it is difficult to maintain a constant steering angle when holding the steering position at the end.

The indirect type refers to setting an angular velocity limit and controlling a steering velocity such that the steering velocity does not exceed the angular velocity limit. The angular velocity limit is determined using an angular velocity limit table, and the angular velocity is controlled so that the driver cannot steer at a steering velocity equal to or greater than the corresponding angular velocity. The indirect type has an advantage in that intuitive tuning can be performed based on the angular velocity, but a disadvantage in that it is difficult to optimize a speed controller. Furthermore, in the indirect type, when a control gain is relatively high, deceleration performance is improved, but noise and abnormal steering feel may occur. When the control gain is relatively low, the end may be impacted without sufficient deceleration, which may lead to damage to components.

The background art of the present disclosure is disclosed in Korean Patent Laid-open Publication No. 10-2019-0034950 (published on April. 3, 2019, entitled "STEERING APPARATUS AND METHOD OF CONTROLLING THE SAME").

### SUMMARY

Various embodiments are directed to a steering control apparatus and method for an electric power steering system, which generate a reaction torque against a driver's steering direction based on kinetic energy stored by a mass component of the electric power steering system and potential energy stored by a rotational elastic component due to tire torsion, thereby improving deceleration performance and minimizing a deviation in deceleration performance depending on a vehicle load.

A steering control apparatus for an electric power steering system according to an embodiment of the present disclosure may include: a processor; and a memory configured to store an instruction that is executed by the processor. The processor may generate a compensation current that is used to generate a reaction torque against a steering direction, based on at least one of kinetic energy stored by a mass component of the electric steering system or potential energy stored by a rotational elastic component due to tire torsion, using a steering angle and a learned end angle.

In an embodiment, the processor may store a current steering angle as the learned end angle based on a preset learning condition being satisfied.

In an embodiment, the processor may store a preset hardware design value as the learned end angle based on a preset learning initialization condition being satisfied.

In an embodiment, the processor may attenuate a motor current to be applied to a motor according to an output attenuation ratio preset to the steering angle.

In an embodiment, the processor may limit the motor current based on the steering angle reaching the learned end angle.

In an embodiment, the processor may generate a kinetic energy compensation current proportional to a magnitude of the kinetic energy stored by the mass component of the electric steering system.

In an embodiment, the processor may adjust the kinetic energy compensation current based on a vehicle speed.

In an embodiment, the processor may generate a potential energy compensation current proportional to a magnitude of the potential energy stored by the rotational elastic component due to the tire torsion, and apply the potential energy compensation current to a motor current to be applied to a motor.

In an embodiment, the processor may adjust the potential energy compensation current based on a vehicle speed.

A steering control method for an electric power steering system according to an embodiment of the present disclosure may include: obtaining, by a processor, a learned end angle; and generating, by the processor, a compensation current that is used to generate a reaction torque against a steering direction, based on at least one of kinetic energy stored by a mass component of the electric steering system or potential energy stored by a rotational elastic component due to tire torsion, using a steering angle and the learned end angle.

In an embodiment, in the generating of the compensation current, the processor may store a current steering angle as the learned end angle based on a preset learning condition being satisfied.

In an embodiment, in the generating of the compensation current, the processor may store a preset hardware design value as the learned end angle based on a preset learning initialization condition being satisfied.

In an embodiment, in the generating of the compensation current, the processor may attenuate a motor current to be applied to a motor according to an output attenuation ratio preset to the steering angle.

In an embodiment, in the generating of the compensation current, the processor may limit the motor current based on the steering angle reaching the learned end angle.

In an embodiment, in the generating of the compensation current, the processor may generate a kinetic energy compensation current proportional to a magnitude of the kinetic energy stored by the mass component of the electric steering system.

In an embodiment, in the generating of the compensation current, the processor may adjust the kinetic energy compensation current based on a vehicle speed.

In an embodiment, in the generating of the compensation current, the processor may generate a potential energy compensation current proportional to a magnitude of the potential energy stored by the rotational elastic component due to the tire torsion, and apply the potential energy compensation current to a motor current to be applied to a motor.

In an embodiment, in the generating of the compensation current, the processor may adjust the potential energy compensation current based on a vehicle speed.

A steering control apparatus and method for an electric power steering system according to an embodiment of the present disclosure may generate a reaction torque against a driver's steering direction based on kinetic energy stored by a mass component of the electric power steering system and potential energy stored by a rotational elastic component due to tire torsion, thereby improving deceleration performance and minimizing a deviation in deceleration performance depending on a vehicle load.

A steering control apparatus and method for an electric power steering system according to an embodiment of the present disclosure may maintain a constant steering angle by minimizing performance variations even when the vehicle load varies due to changes in road surface conditions or vehicle speed.

### BRIEF DESCRIPTION OF THE DRAWINGS

FIG. 1 is a block diagram illustrating a steering control apparatus for an electric power steering system according to an embodiment of the present disclosure.
FIG. 2 is a conceptual diagram illustrating a motor output limiting process according to an embodiment of the present disclosure.
FIG. 3 is a block diagram illustrating a motor output limiting component according to an embodiment of the present disclosure.
FIG. 4 is a flowchart illustrating a rack bar end position learning process according to an embodiment of the present disclosure.
FIG. 5 is a flowchart illustrating a motor output limiting process according to an embodiment of the present disclosure.

### DETAILED DESCRIPTION OF THE ILLUSTRATED EMBODIMENTS

The components described in the example embodiments may be implemented by hardware components including, for example, at least one digital signal processor (DSP), a processor, a controller, an application-specific integrated circuit (ASIC), a programmable logic element, such as an FPGA, other electronic devices, or combinations thereof. At least some of the functions or the processes described in the example embodiments may be implemented by software, and the software may be recorded on a recording medium. The components, the functions, and the processes described in the example embodiments may be implemented by a combination of hardware and software.

The method according to example embodiments may be embodied as a program that is executable by a computer, and may be implemented as various recording media such as a magnetic storage medium, an optical reading medium, and a digital storage medium.

Various techniques described herein may be implemented as digital electronic circuitry, or as computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal for processing by, or to control an operation of a data processing apparatus, e.g., a programmable processor, a computer, or multiple computers. A computer program(s) may be written in any form of a programming language, including compiled or interpreted languages and may be deployed in any form including a stand-alone program or a module, a component, a subroutine, or other units suitable for use in a computing environment. A computer program may be deployed to be executed on one computer or on multiple computers at one site or distributed across multiple sites and interconnected by a communication network.

Processors suitable for execution of a computer program include, by way of example, both general and special purpose microprocessors, and any one or more processors of any kind of digital computer. Generally, a processor will receive instructions and data from a read-only memory or a random access memory or both. Elements of a computer may include at least one processor to execute instructions and one or more memory devices to store instructions and data. Generally, a computer will also include or be coupled to receive data from, transfer data to, or perform both on one or more mass storage devices to store data, e.g., magnetic, magneto-optical disks, or optical disks. Examples of information carriers suitable for embodying computer program instructions and data include semiconductor memory devices, for example, magnetic media such as a hard disk, a floppy disk, and a magnetic tape, optical media such as a compact disk read only memory (CD-ROM), a digital video disk (DVD), etc. and magneto-optical media such as a floptical disk, and a read only memory (ROM), a random access memory (RAM), a flash memory, an erasable programmable ROM (EPROM), and an electrically erasable programmable ROM (EEPROM) and any other known computer readable medium. A processor and a memory may be supplemented by, or integrated into, a special purpose logic circuit.

The processor may run an operating system (OS) and one or more software applications that run on the OS. The processor device also may access, store, manipulate, process, and create data in response to execution of the software. For purpose of simplicity, the description of a processor device is used as singular; however, one skilled in the art will be appreciated that a processor device may include multiple processing elements and/or multiple types of processing elements. For example, a processor device may include multiple processors or a processor and a controller. In addition, different processing configurations are possible, such as parallel processors.

Also, non-transitory computer-readable media may be any available media that may be accessed by a computer, and may include both computer storage media and transmission media.

The present specification includes details of a number of specific implements, but it should be understood that the details do not limit any invention or what is claimable in the specification but rather describe features of the specific example embodiment. Features described in the specification in the context of individual example embodiments may be implemented as a combination in a single example embodiment. In contrast, various features described in the specification in the context of a single example embodiment may be implemented in multiple example embodiments individually or in an appropriate sub-combination. Furthermore, the features may operate in a specific combination and may be initially described as claimed in the combination, but one or more features may be excluded from the claimed combination in some cases, and the claimed combination may be changed into a sub-combination or a modification of a sub-combination.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

It should be understood that the example embodiments disclosed herein are merely illustrative and are not intended to limit the scope of the invention. It will be apparent to one of ordinary skill in the art that various modifications of the example embodiments may be made without departing from the spirit and scope of the claims and their equivalents.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, embodiments that include other components in addition to the components described in the various embodiments are also included in the scope of the present disclosure.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, when a component is referred to as being "linked," "coupled," or "connected" to another component, it is understood that not only a direct connection relationship but also an indirect connection relationship through an intermediate component may also be included. In addition, when a component is referred to as "comprising" or "having" another component, it may mean further inclusion of another component not the exclusion thereof, unless explicitly described to the contrary.

In the present disclosure, the terms first, second, etc. are used only for the purpose of distinguishing one component from another, and do not limit the order or importance of components, etc., unless specifically stated otherwise. Thus, within the scope of this disclosure, a first component in one exemplary embodiment may be referred to as a second component in another embodiment, and similarly a second component in one exemplary embodiment may be referred to as a first component.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, exemplary embodiments that include other components in addition to the components described in the various embodiments are also included in the scope of the present disclosure.

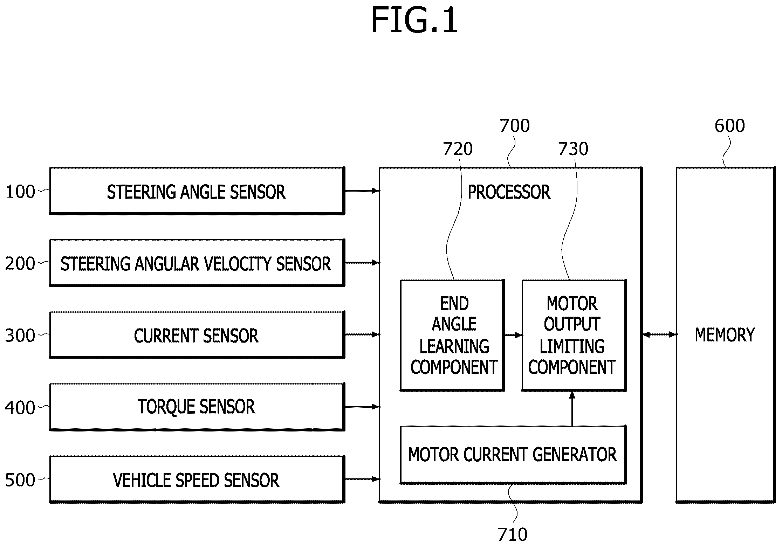

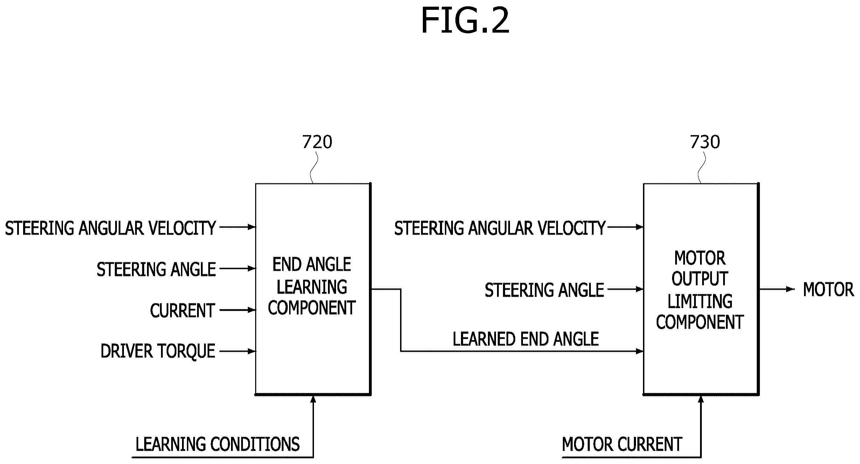

FIG. 1 is a block diagram illustrating a steering control apparatus for an electric power steering system according to an embodiment of the present disclosure. FIG. 2 is a conceptual diagram illustrating a motor output limiting process according to an embodiment of the present disclosure.

Referring to FIG. 1, a steering control apparatus for an electric power steering system according to an embodiment of the present disclosure may include a steering angle sensor 100, a steering angular velocity sensor 200, a current sensor 300, a torque sensor 400, a vehicle speed sensor 500, a memory 600, and a processor 700.

The electric power steering system may include a steering mechanism (not shown) extending from a steering wheel (not shown) to wheels (not shown) on both sides of a vehicle, and an auxiliary power unit configured to provide auxiliary steering power to the steering mechanism.

The steering mechanism may broadly include a steering wheel (not shown), a steering shaft (not shown), a pinion shaft (not shown), a rack bar (not shown), and the wheels (not shown) on both sides of the vehicle.

The steering wheel may be connected to the steering shaft, and may transmit a driver torque generated by a driver to the steering shaft.

The steering shaft may be connected to the pinion shaft via a pair of universal joints, and may transmit the driver torque to the pinion shaft. The pinion shaft may be connected to the rack bar through a rack-and-pinion mechanism. Opposite ends of the rack bar may be connected to the respective wheels on both sides of the vehicle through tie rods and knuckle arms. Furthermore, a typical steering mechanism may include a torsion bar.

The driver may steer a vehicle by adjusting the direction of the wheels on both sides of the vehicle using the steering mechanism. When the driver operates the steering wheel, a driver torque is generated through the steering mechanism, and the wheels on both sides of the vehicle are steered through the rack-and-pinion mechanism and the tie rods by the driver torque.

The steering angle sensor 100 may be installed on the steering shaft, which transmits operating force in conjunction with the steering wheel operated by the driver, and may detect a rotation angle of the steering wheel, that is, a steering angle.

The steering angular velocity sensor 200 may detect a steering angular velocity of the steering wheel. In the present embodiment, the steering angular velocity sensor 200 is illustrated as being provided separately to detect the steering angular velocity by way of example. However, the steering angular velocity may also be obtained by differentiating the steering angle.

The current sensor 300 may detect a current of a motor that is connected to the rotation shaft of the steering wheel and provides an auxiliary rotational force.

The torque sensor 400 may sense a driver torque when the driver operates the steering wheel.

The vehicle speed sensor 500 may sense the speed of the vehicle.

The memory 600 may store various data used by the processor 700. The data may include instructions for performing operations or steps according to embodiments of the present disclosure. In other words, the memory 600 may store instructions for generating, to improve deceleration performance, a reaction torque against a driver's steering direction based on kinetic energy stored by a mass component of the electric power steering system and potential energy stored by a rotational elastic component due to tire torsion.

The memory 600 may include at least one storage medium among a flash memory type memory, a hard disk type memory, a multimedia card micro type memory, a card-type memory, a random access memory (RAM), a static random access memory (SRAM), a read-only memory (ROM), a programmable read-only memory (PROM), an erasable programmable read-only memory (EPROM), and an electrically erasable programmable read-only memory (EEPROM).

The processor 700 may be connected to the memory 600 and may execute instructions stored in the memory 600. The processor 700 may control, by executing the instructions stored in the memory 600, at least one other component (e.g., a hardware or software component) connected to the processor 700, and may perform various data processing or computation operations.

Furthermore, the processor 700 may be set such that the configurations for performing respective functions are distinguished at a hardware level, a software level, or a logic level. For example, dedicated hardware for performing respective functions may be used. To this end, the processor 700 may be implemented with or include at least one of an application specific integrated circuit (ASIC), a digital signal processor (DSP), programmable logic devices (PLDs), field programmable gate arrays (FPGAs), a central processing unit (CPU), microcontrollers, and/or microprocessors.

The processor 700 may be implemented with a central processing unit (CPU) or a system on chip (SoC), and may operate an operating system or an application to control a plurality of hardware or software components connected to the processor 700 and perform various data processing and computation operations. The processor 700 may be configured to execute at least one instruction stored in the memory 600 and store data resulting from the execution in the memory 600.

The processor 700 may generate a reaction torque against the driver's steering direction. To achieve the foregoing, the processor 700 may generate a compensation current based on at least one of kinetic energy stored by the mass component of the electric power steering system or potential energy stored by the rotational elastic component due to the tire torsion, according to a steering angle, and may apply the compensation current to the motor.

More specifically, the processor 700 may generate a kinetic energy compensation current and a potential energy compensation current of the electric power steering system to improve deceleration performance and minimize a deviation in deceleration performance depending on a vehicle load.

The kinetic energy compensation current may be proportional to the magnitude of kinetic energy stored by the mass component of the steering system, and may generate a reaction torque against the driver's steering direction.

The kinetic energy compensation current may generate a high reaction torque under conditions in which the magnitude of kinetic energy is large, such as low-friction road surfaces in parking lots or rapid steering during a U-turn, thereby rapidly decelerating the angular velocity.

The potential energy compensation current may be proportional to the magnitude of potential energy stored by the rotational elastic component due to tire torsion, and may generate a reaction torque against the driver's steering direction. Generally, as the steering position approaches the end, the reaction torque increases rapidly. Therefore, the potential energy compensation current may serve to decelerate the angular velocity and minimize performance variations even when the vehicle load changes due to road surface or vehicle speed variations, thereby enabling a constant steering angle to be maintained. In other words, the potential energy compensation current may prevent the steering wheel from further turning toward an end direction when the load decreases, and may prevent the steering wheel from returning in a direction opposite to the end when the load increases.

The processor 700 may include a motor current generator 710, an end angle learning component 720, and a motor output limiting component 730.

The motor current generator 710 may determine driving conditions of the vehicle based on a steering angle, a steering angular velocity, a driver torque, and a vehicle speed, and may generate a motor current of a motor according to the driving conditions to produce auxiliary steering power, thereby enhancing the driver's steering feel and enabling stable steering.

The end angle learning component 720 may obtain a learned end angle. The learned end angle may be a learned angle obtained through end angle learning.

The end angle learning component 720 may obtain the learned end angle depending on whether preset learning conditions are satisfied, in a state in which end angle learning is not completed.

The end angle learning component 720 may store an end angle in the case where the learning condition is satisfied, and may obtain a learned end angle by using the stored end angle. Here, the learning condition may be an over load protection (OLP) condition for performing an OLP function based on the steering angle, the angular velocity, and the motor current. The end angle learning component 720 may determine that the OLP condition, that is, the learning condition, is satisfied if the steering angle exceeds a preset first steering angle reference value, the angular velocity exceeds a preset first angular velocity reference value, and the motor current exceeds a preset motor current reference value.

The OLP may refer to limiting motor output under specific conditions in order to prevent a continuous maximum current from flowing when the steering wheel is at the end angle during steering.

Typically, in an electric power steering system, a large current is applied to generate a high output when the steering wheel is rotated to either end. In this case, components such as a motor, an engine control unit (ECU), or a motor control unit (MCU) may experience operational failure due to heat or may be damaged. Accordingly, the OLP may prevent a motor or an ECU (or MCU) from experiencing operational failure or being damaged due to heat generated by the application of high current in the electric power steering system. In other words, the OLP may determine that the electric power steering system is in a maximum current application state, based on load information and steering angle information of the steering wheel when the driver fully turns the steering wheel, and limits the current, thereby reducing heat generated in the electric power steering system.

The end angle learning component 720 may store a current steering angle as a learned end angle if the above-described OLP condition is satisfied. In other words, the end angle learning component 720 may store an end angle and obtain a learned end angle based on the stored end angle when the OLP condition is satisfied. Typically, in the case where the driver steers the steering wheel to the end, the OLP operating condition is satisfied, and the learned end angle may be a steering angle at a time point at which the OLP operating condition is satisfied.

Even after learning is completed as described above, learning initialization conditions may be satisfied due to factors such as curb impact, stored value error, or hardware failure. In this case, the end angle learning component 720 may determine whether the learning initialization conditions are satisfied based on the steering angle, the angular velocity, and the driver torque. The end angle learning component 720 may determine that the learning initialization conditions are satisfied if the steering angle is less than a preset second steering angle reference value, the angular velocity is less than a second angular velocity reference value, and the driver torque exceeds a torque reference value.

If the learning initialization conditions are satisfied, the end angle learning component 720 may obtain a learned end angle based on a hardware design value. That is, the end angle learning component 720 may set a hardware design value, which is mechanically and structurally preset, as the learned end angle.

The motor output limiting component 730 may generate a compensation current based on at least one of the kinetic energy stored by the mass component of the electric power steering system and the potential energy stored by the rotational elastic component due to tire torsion, according to the steering angle and the learned end angle, and may apply the compensation current to the motor.

Furthermore, the motor output limiting component 730 may apply an output attenuation ratio to the motor current, which is generated by the motor current generator 710, according to a preset output attenuation ratio table, so that the motor current is immediately attenuated when the steering angle reaches a learned end value.

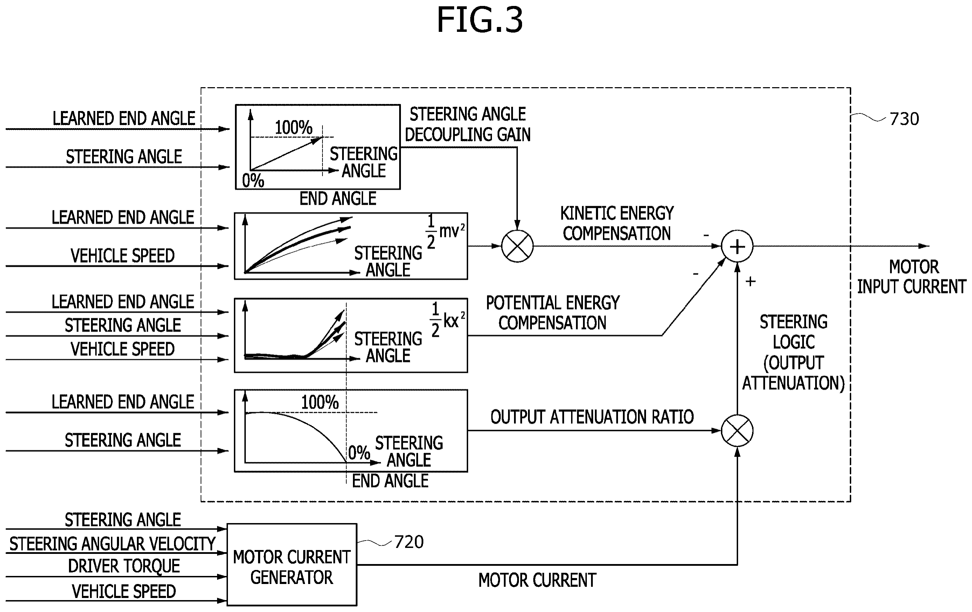

FIG. 3 is a block diagram illustrating the motor output limiting component according to an embodiment of the present disclosure.

Referring to FIG. 3, the motor output limiting component 730 may receive a learned end angle from the end angle learning component 720, and may receive a steering angle, a vehicle speed, a steering angular velocity, and a driver torque from the steering angle sensor 100, the vehicle speed sensor 500, the steering angular velocity sensor 200, and the torque sensor 400, respectively.

The motor output limiting component 730 may receive a motor current from the motor current generator 710. The motor output limiting component 730 may extract an output attenuation ratio set to the steering angle from the output attenuation ratio table, based on the motor current.

The output attenuation ratio table may be a table in which an output attenuation ratio of the motor current is stored for each steering angle.

In the output attenuation ratio table, the output attenuation ratio may decrease as the steering angle increases, and may become '0' at the learned end angle.

As the steering angle approaches the learned end angle, the output attenuation ratio is reduced. Accordingly, the motor output limiting component 730 may reduce the motor current as the steering angle approaches the learned end angle, thereby reducing the auxiliary steering power provided to the steering system. Thereafter, if the steering angle matches the learned end angle, the motor output limiting component 730 may apply an output attenuation ratio of '0' to the motor current, thereby reducing the motor current to '0'. Accordingly, in a state where the steering angle matches the learned end angle, the motor current applied to the motor may be immediately attenuated to '0', so that no auxiliary steering power is provided to the steering system.

The motor output limiting component 730 may generate a compensation current proportional to the magnitude of kinetic energy stored by the mass component of the steering system, and may generate a reaction torque against the driver's steering direction. Accordingly, the angular velocity may be rapidly reduced under a high-speed steering condition in which the kinetic energy is relatively large.

More specifically, the motor output limiting component 730 may generate a kinetic energy compensation current by applying the learned end angle, the mass component of the steering system, and the steering angular velocity to $\frac{1}{2} {mv}^{2}$.

Here, m may denote the mass component of the steering system, and v may denote the steering angular velocity.

Furthermore, the motor output limiting component 730 may compensate the kinetic energy compensation current based on the vehicle speed. In other words, the motor output limiting component 730 may increase or decrease the kinetic energy compensation current depending on the vehicle speed. The motor output limiting component 730 may increase the kinetic energy compensation current as the vehicle speed decreases.

The motor output limiting component 730 may correct the kinetic energy compensation current using a steering angle decoupling gain set depending on the steering angle and the learned end angle.

The motor output limiting component 730 may compare the steering angle and the learned end angle and calculate a difference between the steering angle and the learned end angle, and may extract a steering angle decoupling gain according to the calculated difference and apply the extracted steering angle decoupling gain to the kinetic energy compensation current.

The steering angle decoupling gain may increase as the difference between the steering angle and the learned end angle decreases, and may reach a maximum when the steering angle matches the learned end angle.

In the motor output limiting component 730, the steering angle decoupling gain may reach the maximum when the difference between the steering angle and the learned end angle becomes small and the steering angle matches the learned end angle, that is, when the difference the steering angle and the learned end angle becomes '0'. Accordingly, the kinetic energy compensation current may increase as the difference between the steering angle and the learned end angle decreases. When the difference between the steering angle and the learned end angle becomes '0', the kinetic energy compensation current may reach a maximum.

The motor output limiting component 730 may generate a potential energy compensation current proportional to the magnitude of potential energy stored by a rotational elastic component caused by tire torsion, thereby generating a reaction torque against the driver's steering direction. As a result, the angular velocity may be rapidly reduced as the steering angle approaches the end angle. Furthermore, in a state where the steering wheel is held, even under conditions in which the vehicle load changes, for example, due to changes in road surface or vehicle speed, the steering angle may be maintained constant, thereby preventing the steering wheel from further turning toward the end direction when the load decreases, or from returning in a direction opposite to the end when the load increases.

More specifically, the motor output limiting component 730 may generate the potential energy compensation current by applying the rotational elastic component caused by tire torsion and the steering angle to $\frac{1}{2} {kx}^{2}$*.*

Here, k may denote a rotational elastic component caused by tire torsion, and x may denote a steering angle.

The motor output limiting component 730 may correct the potential energy compensation current based on the vehicle speed. In other words, the motor output limiting component 730 may increase or decrease the potential energy compensation current depending on the vehicle speed. The motor output limiting component 730 may increase the potential energy compensation current as the vehicle speed decreases.

The motor output limiting component 730 may output, to the motor, a current obtained by adding the kinetic energy compensation current and the potential energy compensation current to the motor current to which the output attenuation ratio is applied, thereby enabling a reaction torque to act against the steering direction of the steering wheel.

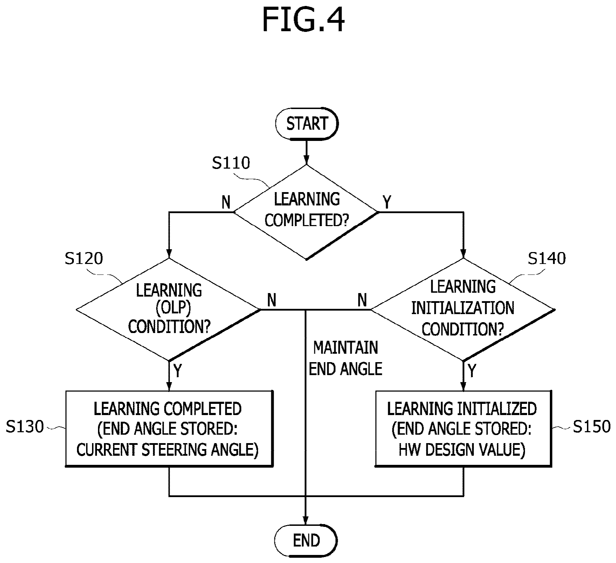

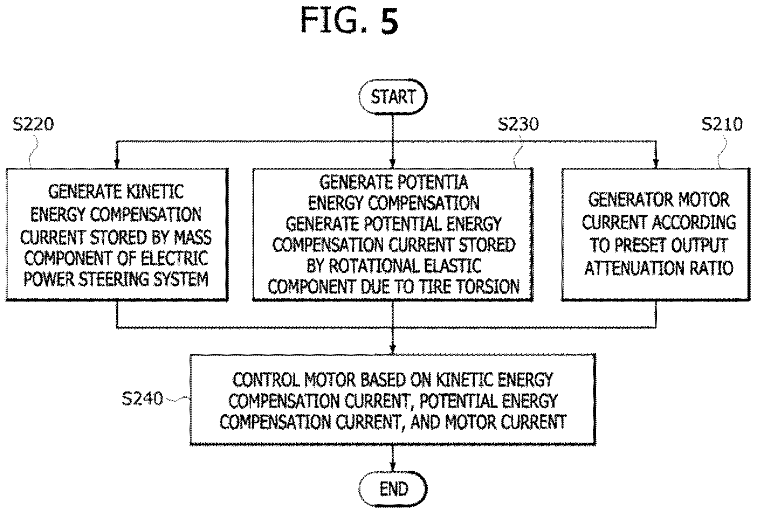

Hereinafter, a steering control method for an electric power steering system according to an embodiment of the present disclosure will be described in detail with reference to FIGS. 4 and 5.

FIG. 4 is a flowchart illustrating a rack bar end position learning process according to an embodiment of the present disclosure.

Referring to FIG. 4, the end angle learning component 720 may determine whether end angle learning has been completed (in step S110).

If it is determined in step S110 that the end angle learning has not been completed, the end angle learning component 720 may determine whether preset learning conditions are satisfied (in step S120). The end angle learning component 720 may determine that the OLP condition is satisfied when the steering angle exceeds the preset first steering angle reference value, the angular velocity exceeds the preset first angular velocity reference value, and the motor current exceeds the preset motor current reference value.

If it is determined in step S120 that the learning conditions are satisfied, the end angle learning component 720 may store a current steering angle as a learned end angle (in step S130).

On the other hand, if it is determined in step S110 that the learning has not been completed, the end angle learning component 720 may determine whether the learning initialization conditions are satisfied based on the steering angle, the angular velocity, and the driver torque (in step S140). The end angle learning component 720 may determine that the learning reset conditions are satisfied when the steering angle is less than the preset second steering angle reference value, the angular velocity is less than the second angular velocity reference value, and the driver torque exceeds the torque reference value.

If it is determined in step S140 that the learning initialization conditions are satisfied, the end angle learning component 720 may set a hardware design value, which is mechanically and structurally preset, as the learned end angle (in step S150).

Subsequently, the motor output limiting component 730 may limit the motor output based on the learned end angle and the steering angle.

FIG. 5 is a flowchart illustrating a motor output limiting process according to an embodiment of the present disclosure.

Referring to FIG. 5, the motor output limiting component 730 may receive the learned end angle from the end angle learning component 720, and may respectively receive the steering angle, the vehicle speed, the steering angular velocity, and the driver torque from the steering angle sensor 100, the vehicle speed sensor 500, the steering angular velocity sensor 200, and the torque sensor 400.

The motor output limiting component 730 may receive a motor current from the motor current generator 710, extract an output attenuation ratio set to the steering angle from the output attenuation ratio table, and apply the output attenuation ratio to the motor current (in step S210). In this case, the motor output limiting component 730 may reduce the motor current by decreasing the output attenuation ratio as the steering angle approaches the learned end angle, thereby reducing the auxiliary steering power provided to the steering system. Subsequently, when the steering angle matches the learned end angle, the output attenuation ratio of '0' may be applied to the motor current, so that the motor current may become '0'.

The motor output limiting component 730 may generate a compensation current proportional to the magnitude of kinetic energy stored by the mass component of the steering system (in step S220). In other words, the motor output limiting component 730 may generate a kinetic energy compensation current by using the learned end angle, the mass component of the steering system, and the angular velocity. In this case, the motor output limiting component 730 may correct the kinetic energy compensation current according to the vehicle speed. Furthermore, the motor output limiting component 730 may calculate a difference value between the steering angle and the learned end angle by comparing the steering angle with the learned end angle, extract a steering angle decoupling gain based on the calculated difference value, and apply the steering angle decoupling gain to the kinetic energy compensation current. Accordingly, the kinetic energy compensation current may increase as the difference value between the steering angle and the learned end angle decreases, and may reach a maximum when the difference value between the steering angle and the learned end angle becomes '0'.

The motor output limiting component 730 may generate a potential energy compensation current proportional to the magnitude of potential energy stored by the rotational elastic component caused by tire torsion (in step S230). In other words, the motor output limiting component 730 may generate the potential energy compensation current by using the rotational elastic component caused by tire torsion and the angular velocity. The motor output limiting component 730 may correct the potential energy compensation current according to the vehicle speed. In other words, the motor output limiting component 730 may increase or decrease the potential energy compensation current depending on the vehicle speed.

Subsequently, the motor output limiting component 730 may output, to the motor, a current obtained by adding the kinetic energy compensation current and the potential energy compensation current to the motor current to which the output attenuation ratio is applied, thereby enabling a reaction torque to act against the steering direction of the steering wheel (in step S240).

In the present embodiment, for ease of understanding, the motor current generator 710, the end angle learning component 720, and the motor output limiting component 730 are described as separate components provided in the processor 700. However, depending on the embodiment, the processor 700 may be implemented to integrally perform the respective functions of the sub-components.

Although various embodiments of the disclosure have been disclosed for illustrative purposes, those skilled in the art will appreciate that various modifications, additions and substitutions are possible, without departing from the scope and spirit of the disclosure as defined in the accompanying claims. Thus, the true technical scope of the disclosure should be defined by the following claims.

## Claims

1. A steering control apparatus for an electric power steering system, comprising:
a processor; and
a memory configured to store an instruction that is executed by the processor,
wherein the processor generates a compensation current that is used to generate a reaction torque against a steering direction, based on at least one of kinetic energy stored by a mass component of the electric steering system or potential energy stored by a rotational elastic component due to tire torsion, using a steering angle and a learned end angle.

2. The steering control apparatus of claim 1, wherein the processor stores a current steering angle as the learned end angle based on a preset learning condition being satisfied.

3. The steering control apparatus of claim 1 or 2, wherein the processor stores a preset hardware design value as the learned end angle based on a preset learning initialization condition being satisfied.

4. The steering control apparatus of any one of claims 1 to 3, wherein the processor attenuates a motor current to be applied to a motor according to an output attenuation ratio preset to the steering angle.

5. The steering control apparatus of claim 4, wherein the processor limits the motor current based on the steering angle reaching the learned end angle.

6. The steering control apparatus of any one of claims 1 to 5, wherein the processor generates a kinetic energy compensation current proportional to a magnitude of the kinetic energy stored by the mass component of the electric steering system.

7. The steering control apparatus of claim 6, wherein the processor adjusts the kinetic energy compensation current based on a vehicle speed.

8. The steering control apparatus of any one of claims 1 to 7, wherein the processor generates a potential energy compensation current proportional to a magnitude of the potential energy stored by the rotational elastic component due to the tire torsion, and applies the potential energy compensation current to a motor current to be applied to a motor.

9. The steering control apparatus of claim 8, wherein the processor adjusts the potential energy compensation current based on a vehicle speed.

10. A steering control method for an electric power steering system, comprising:
obtaining, by a processor, a learned end angle; and
generating, by the processor, a compensation current that is used to generate a reaction torque against a steering direction, based on at least one of kinetic energy stored by a mass component of the electric steering system or potential energy stored by a rotational elastic component due to tire torsion, using a steering angle and the learned end angle.
